# EUROPEAN PATENT APPLICATION

(11) **EP 0 685 677 A1**
(43) Date of publication of application: **06.12.1995**
(21) Application number: 95107509.2
(22) Date of filing: 17.05.1995
(51) Int. Cl.: F16L 33/207

(54) **Improved revolving-nut tubular connector, particularly for flexible oleodynamic hoses and the like**

(30) Priority: 02.06.1994 IT MI940392
(71) Applicant: HYDROFIT S.p.A., I-24040 Boltiere (Bergamo) (IT)
(72) Inventor: Caglioni, Fabio Maurilio, I-24040 Boltiere (Bergamo) (IT)
(74) Representative: Modiano, Guido, Dr.-Ing.

(57) **Abstract**

A tubular connector of the type with a revolving locking nut particularly adapted for flexible oleodynamic hoses and the like, comprising a nipple fitting (1) with a shoulder (3) for the abutment of a locking ring (6); the connector comprises a conventional revolving nut (10) for locking the sealing head (7) of the nipple body (1) on the end of the tube or nozzle of a user device, and the nut (10) has, in a rearward position, an annular rim or lip (10b) that protrudes coaxially from the threaded cavity and has such dimensions as to allow its insertion on the nipple (1) and its subsequent partial deformation by pressing, after fitting on the tubular nipple body, so as to reduce its diameter and thus create a mechanical retention element (10b) that acts as a spacer between the nut (10) and the shoulder (3) of the nipple; at least one mechanical retention element, substantially an internal annular rib (6b), is furthermore provided inside the locking ring (6) and is adapted to be correctly located with respect to the nipple before locking by pressing.

## Description

The present invention relates to a tubular connector for flexible oleodynamic hoses, of the type with a revolving nut which is partially slideable along said connector, improved so as to facilitate the assembly of the nut on the connector and of the conventional flexible locking ring on the nipple portion of said connector.

Currently, conventional tubular connectors for flexible oleodynamic hoses in which fluids at high pressure flow are generally constituted by a short metal tube in which an external portion is provided with parallel annular ribs arranged transversely to the tube axis and on which the flexible hose is force-fitted; at the end of the ribbed portion, known in practice as "nipple fitting", usually there is an annular shoulder which acts as abutment for the end of the fitted flexible hose. The flexible hose is then locked on the nipple by means of an internally toothed tubular ring, which is forced by partially compressing its cylindrical wall. To ensure stable positioning of the tubular ring so as to prevent it from slipping off, the end of the ring has an internal annular rib which, during locking on the nipple, fits ahead, that is to say on the outside, of said annular shoulder. The nipple fitting then continues with a portion having a constant cross-section and ending with a conical head that forms a seal against the correspondingly shaped end of a rigid or flexible duct or of a threaded nozzle of a device that uses the fluid fed through the connector. Said conical abutment head is locked onto said nozzle or duct by means of a threaded nut that is inserted beforehand on the end portion of the nipple fitting.

Presently, the locking nut is fitted on the tube of the connector in various ways according to the type of thread used (for example gas thread, SI thread, or other); in practice, the systems known as pressed nut, pin-locked nut and revolving or abutting nut are in widespread use.

Among all these fitting systems, the one which in practice is the most efficient in terms of reliability of the stability of the mutual positioning of the nut and of the connector head is the system that uses the revolving or abutting nut.

This system has a fundamental characteristic which positively distinguishes it from the others: the possibility to raise to extremely high values the resistance of the nut to longitudinal traction with respect to the thread axis, thus ensuring full safety against the extrusion of the connector head with respect to the nut.

In order to ensure that the nut remains in the correct position for the fitting of the ring, a movable washer, made of hard plastics, has been inserted in the groove of the nipple in order to lock the ring on the hose between the shoulder and the washer.

Although this solution prevents the nut from moving backwards during the fitting of the ring, it creates, in the region for locking the ring on the nipple, a possible cause of disengagement of said ring during its operation.

Furthermore, the cost of the washer and of its fitting heavily affect the overall cost of the product. It also becomes necessary to keep in store a considerable range of washers in terms of types and quantities, with all the corresponding cost increases.

Accordingly, a principal aim of the present invention is to provide a revolving-nut connector for flexible oleodynamic hoses and the like, improved so as to facilitate the fitting of the nut on the body of the nipple without using a washer, or other similar element, to prevent disengagement from said nipple, and so as to allow the correct and stable fitting of the locking ring of the flexible hose on the nipple body.

Another object of the invention is to provide a revolving-nut connector that is conceived and structured in such a way that it is structurally simple and highly effective in terms of tightness in the ring-nipple area and allows a consistent reduction in the overall costs of the product.

This aim, these objects, and others which will become apparent from the description that follows, are achieved by a tubular connector of the type with a revolving nut that is partially movable along the connector itself, particularly adapted for flexible oleodynamic hoses and the like and constituted by a nipple fitting with a shoulder for the abutment of a ring for locking the flexible hose on said nipple, said connector having, according to the present invention, a conventional revolving nut for locking the sealing head of the nipple body on the end of the tube or nozzle of a user device; said nut having, in a rearward position, an annular rim or lip that protrudes coaxially from the threaded cavity and has such dimensions as to allow its insertion on the nipple and its subsequent partial deformation by pressing, after fitting on the nipple tubular body, so as to reduce its diameter and thus create a mechanical retention element that acts as a spacer between the nut and said shoulder of the nipple; at least one mechanical retention element, substantially an internal annular rib, being furthermore provided inside said locking ring, and being adapted to correctly locate itself with respect to the nipple before locking by pressing.

More particularly, said tubular nipple body preferably has at least two mutually close shoulders between which an annular cavity is formed; said cavity is adapted to receive and stably retain the end rib of said locking ring.

Further characteristics and advantages of the present invention will become apparent from the following detailed description, given with reference to the accompanying drawings, provided only by way of non-limitative example and wherein:
figure 1 is, by way of example, an axial diametrical sectional view of a known revolving-nut connector, that is to say, with a nut retainer constituted by a flat plastic washer;
figure 2 is another axial diametrical sectional view of a revolving-nut tubular connector according to the invention, shown during the insertion of the nut on the nipple fitting;
figure 2a instead illustrates only the nut provided according to the invention and shown in figure 2;
figure 3 is a view of the same connector as in the preceding figures, with the nut fitted on the nipple and shown both in the locking position and in the position in which it abuts against the shoulder of the nipple;
figure 3a instead shows only the nut already shown in figure 3;
figure 4 is a view of the connector according to the invention, shown in the initial step for positioning the locking ring of the flexible hose on the nipple; and
figure 5 is a view of the connector shown in figure 4, with the ring in the stable locking position.

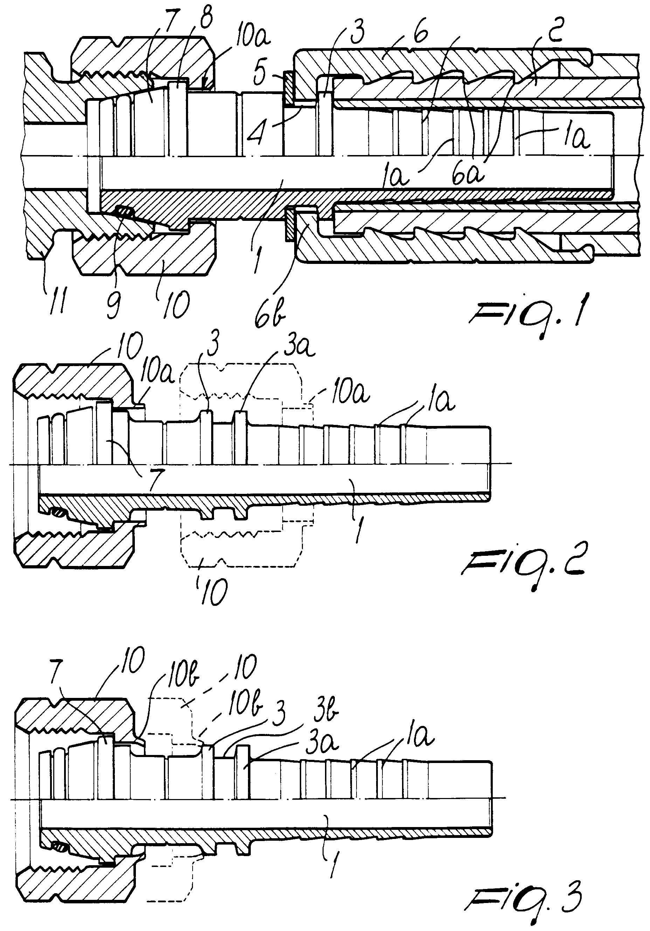

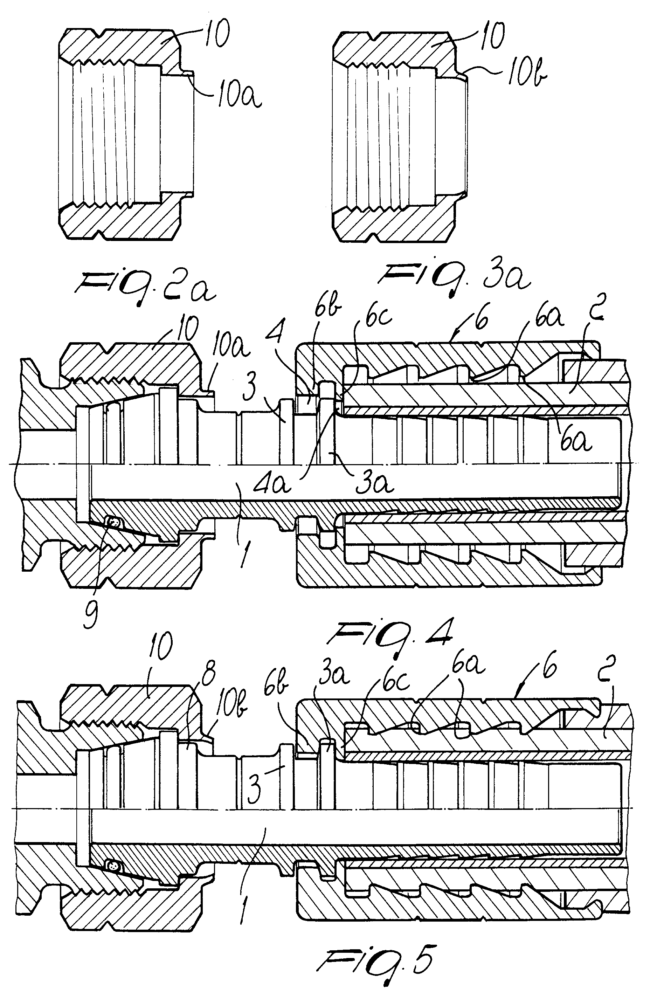

With reference to the above figures, the connector shown in figure 1, which is, as mentioned, of a known and extensively used type, is described hereafter to allow clear and complete understanding of the structural and functional characteristics of the connector according to the present invention, shown in figures 2 to 5.

Therefore, the connector of figure 1 substantially comprises a substantially frustum-shaped short tube 1 that constitutes the tubular nipple body; said body is provided, on a longer portion, with parallel transverse sets of teeth 1a on which a flexible hose 2 is inserted by slight forcing; at the end of the part 1a, the nipple fitting has an annular shoulder 3 and, upstream of said shoulder, an annular groove 4 in which a flat washer 5, made of rigid plastics or the like, is anchored. The locking ring 6 is also tubular and has an internal set of teeth 6a and, at its end, an internal annular rib 6b to be inserted between the washer 5 and the shoulder 3 by pressing the ring on the flexible hose 2. As a consequence of the pressing action, therefore, the ring locks the flexible hose 2 on the nipple and remains locked, contrasting the disengagement of said nipple, by its internal rib 6b, which is seated in the groove 4 by forcing. At the end of the nipple that is opposite to the end locked by the ring there is an abutment head 7 that is substantially frustum-shaped and provided with a shoulder 8 and with one or more toroidal sealing rings 9. A nut 10 locks the head of the nipple in a corresponding and substantially frustum-shaped cavity that is provided at the end of another tube or connector 11 of a device that uses the pressurized fluid fed by the connector.

In this type of connector, the diameter 10a of the rear end of the nut 10 is slightly larger than the diameter of the shoulder 3 of the nipple and smaller than the diameter of the shoulder 8 provided on the sealing head 7.

Accordingly, the nut is fitted by inserting it from the end of the nipple that is opposite to the one ending with the head 7 and by moving it into abutment against the shoulder 8 of said head; the washer 5 is then inserted in the groove 4, said ring being split so as to be inserted in said groove; then the flexible hose 2 is fitted over the nipple, abutting it against the shoulder 3, and then the ring is fitted on the flexible hose, placing it so that its end rib 6b is on the groove 4 after adequately moving the washer against the side wall of said groove. After this positioning, the ring is pressed on the nipple so that the flexible hose is locked on said nipple and is retained, against possible disengagement, in the groove 4 between the washer 5 and the shoulder 3.

In practice, this washer has a double function, that is to say to prevent the disengagement of the nut from the nipple in the absence of the flexible hose and of the ring, and to constitute a means for retaining the end of said ring within the retention groove 4.

As already mentioned, the use of a secondary retention ring for the nut, besides requiring a large availability of washers and an assembly operation, with an obvious significant increase in costs, entails the disadvantage that it does not guarantee, in any case, a correct initial positioning and an equally correct stability in the locking of the ring so as to prevent its disengagement from the nipple, because of the elasticity of the washer.

In order to fully obviate these drawbacks, the revolving-nut connector provided according to the invention has, first of all, a locking nut 10 (figure 2a) that has, at the rear, an anular projection or lip 10a that initially has the same diameter as the nut, so as to allow the nut to be fitted on the nipple 1 by passing over the shoulders 3-3a thereof, as shown by the dashed lines in figure 2, until it abuts against the conical head 7. Once the nut has passed beyond the shoulders, its annular lip 10a is deformed slightly by pressing, as shown in figure 3a, until it assumes the shape 10b.

After the deformation of the lip, the nut can slide on the nipple until it is positioned against the shoulder 3, as illustrated by the dashed lines in figure 3; in this position, the deformed lip 10b, besides acting as a retainer for holding the nut against the shoulder 3, keeps said nut spaced from said shoulder, thus avoiding the danger that the ring, during positioning prior to pressing, might find an obstacle capable of compromising correct locking on the flexible hose.

Furthermore, also according to the invention, two mutually close shoulders 3 and 3a are preferably provided on the nipple fitting 1 and are adapted to form, between them, a deep rigid groove 3b (figure 3) in which the internal annular projection 6b provided at the end of the ring 6 can be seated in a stable manner.

Likewise, instead of a single internal lip 6b, it is possible to provide a second lip 6c in the ring 6, said second lip being meant to abut stably against the innermost shoulder 3a of the nipple, in order to further ensure the stability of the locking of the ring against disengagement from the nipple.

The connector provided according to the invention is furthermore illustrated in figure 4 in the position in which the ring is correctly located, so that its inner lips 6b and 6c are located at the grooves 4-4a, and is shown in figure 5 with the ring stably pressed against the nipple.

Obviously, in its practical embodiment the invention as described and illustrated according to some embodiments thereof is susceptible of modifications and variations in the dimensions of its various parts and in the materials used, without abandoning the scope of the protection of the invention itself. Thus, for example, the described connector can be provided in a straight or curved form for applications on any type of hydraulic hose sheathed in a metallic or thermoplastic spiral braiding.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Tubular connector of the type with a revolving locking nut that is partially movable along the connector itself, particularly adapted for flexible oleodynamic hoses and the like and constituted by a nipple fitting (1) with a shoulder (3) for the abutment of the ring (6) for locking the flexible hose on said nipple (1), characterized in that said connector has a conventional revolving nut (10) for locking the sealing head (7) of the nipple body (1) on the end of the tube or nozzle of a user device; said nut (10) having, in a rearward position, an annular rim or lip (10a) that protrudes coaxially from the threaded cavity and has such dimensions as to allow its insertion on the nipple (1) and its subsequent partial deformation by pressing, after fitting on the tubular nipple body, so as to reduce its diameter and thus create a mechanical retention element (10b) that acts as a spacer between the nut (10) and said shoulder (3) of the nipple (1); at least one mechanical retention element, substantially an internal annular rib (6b), being furthermore provided inside said locking ring (6), and being adapted to correctly locate itself with respect to the nipple before locking by pressing.

2. Tubular connector according to claim 1, characterized in that said nipple fitting is provided with at least two parallel and mutually close shoulders (3,3a) between which there is an annular cavity (3b) adapted to receive and stably retain the internal lip or rib (10b) at the end of said locking ring (6).

3. Tubular connector according to claim 1, characterized in that said locking ring (6) is provided, inside its end, with two annular raised portions, one (6b) of which is adapted to be stably accommodated inside the groove (3b) formed by said two shoulders (3,3a), the other raised portion (6c) being located against the outside wall of one of said shoulders (3a).

4. Tubular connector according to the preceding claims, characterized in that it is provided both in straight and in curved shape for applications on hydraulic hoses coiled in a spiral with metallic or thermoplastic braiding.
